# EUROPÄISCHE PATENTSCHRIFT

(11) **EP 1 194 823 B1**
(45) Veröffentlichungstag und Bekanntmachung des Hinweises auf die Patenterteilung: **18.08.2004**
(21) Anmeldenummer: 00944024.9
(22) Anmeldetag: 10.07.2000
(51) Int. Cl.: G05D 7/01

(54) **DURCHFLUSSMENGENREGLER**
FLOW REGULATOR
REGULATEUR DE DEBIT

(30) Priorität: 13.07.1999 DE 19932596
(43) Veröffentlichungstag der Anmeldung: 10.04.2002
(73) Patentinhaber: Neoperl GmbH, 79379 Müllheim (DE)
(72) Erfinder: Hart, Keith, Welland, Worcestershire (GB)
(74) Vertreter: Patent- und Rechtsanwaltssozietät, Maucher, Börjes & Kollegen
(86) Internationale Anmeldenummer: PCT/EP2000/006531
(87) Internationale Veröffentlichungsnummer: WO 2001/004714

(56) Entgegenhaltungen:
- WO-A-98/21419
- US-A- 4 000 857

## Beschreibung

Die Erfindung betrifft einen Durchflußmengenregler mit einem Reglergehäuse, das in einem Durchtrittskanal einen Steuerzapfen oder Steuerkegel aufweist, den ein ringförmiger Drosselkörper aus elastischem Material umgreift, welcher Drosselkörper zwischen sich und zumindest einem gehäusefesten Teil einen Steuerspalt begrenzt, dessen Durchtrittsquerschnitt durch den sich unter der beim Durchströmen bildenden Druckdifferenz verformenden Drosselkörper veränderbar ist, wobei der Steuerspalt sowohl zwischen dem Drosselkörper und der den Durchtrittskanal begrenzenden inneren Mantelfläche des Reglergehäuses als auch zwischen dem Drosselkörper und der Umfangs-Mantelfläche des Steuerzapfens oder Steuerkegels vorgesehen ist, und wobei sowohl an der inneren Mantelfläche des Reglergehäuses als auch an der Umfangs-Mantelfläche des Steuerzapfens oder Steuerkegels in Umfangsrichtung voneinander beabstandete und in Durchflußrichtung orientierte Regulierausnehmungen vorgesehen sind.

Solche Durchflußmengenregler werden beispielsweise in Wasserleitungen eingesetzt, um die pro Zeiteinheit geforderte Durchflußmenge auch bei starken Druckschwankungen möglichst konstant halten zu können.

Die vorbekannten Durchflußmengenregler weisen in einem Durchtrittskanal ihres Reglergehäuses einen sich konisch verjüngenden Steuerzapfen auf, den ein ringförmiger Drosselkörper aus elastischem Material umgreift. Dieser ringförmige Drosselkörper begrenzt zwischen sich und einem gehäusefesten Teil einen Steuerspalt, dessen Durchtrittsquerschnitt durch den sich unter der beim Durchströmen bildenden Druckdifferenz verformenden Drosselkörper veränderbar ist. Dabei sind an den den Steuerspalt begrenzenden Mantelflächen der gehäusefesten Teile in Umfangsrichtung voneinander beabstandete und in Durchflußrichtung orientierte Regulierausnehmungen vorgesehen.

So kennt man bereits Durchflußmengenregler, bei denen die Regulierausnehmungen an der inneren Mantelfläche des Reglergehäuses vorgesehen sind und gegebenenfalls ein zentrales Durchgangsloch vorhanden ist. Diese vorbekannten Durchflußmengenregler haben jedoch den Nachteil, daß die pro Zeiteinheit durchströmende Flüssigkeitsmenge nicht völlig konstant gehalten werden kann, sondern mit steigendem Druck weiterhin leicht zunimmt.

Auch kennt man bereits Durchflußmengenregler, welche die Regulierausnehmungen an der Umfangs-Mantelfläche des Steuerzapfens aufweisen (vgl. zum Beispiel DE 40 41 116 A1). Diese Durchflußmengenregler zeichnen sich zwar dadurch aus, daß die geforderte Durchflußmenge bei einem vergleichsweise geringen Flüssigkeitsdruck erreicht wird, jedoch stellt sich häufig ein erheblich über dem Durchfluß-Sollwert liegendes Durchfluß-Maximum ein, das bei steigendem Druck wieder abnimmt.

Aus der DE-OS 21 31 117 ist bereits ein Durchflußmengenregler bekannt, dessen elastischer Drosselkörper wasserdruckabhängig sowohl in axialer als auch in radialer Richtung gegen entsprechende Regelflächen gepreßt wird. Der elastische Drosselkörper des vorbekannten Durchflußmengenreglers umgreift dazu einen zentralen profilierten Steuerzapfen. Darüber hinaus sitzt der elastische Drosselkörper auf einer Schulterfläche auf, die mit einer Anzahl muldenförmiger Vertiefungen versehen ist. Diese muldenförmigen Vertiefungen bewirken, daß bei niedrigem Anschlußdruck eine zusätzliche Flüssigkeitsmenge am Innenumfang des Reglergehäuses entlang unter dem elastischen Drosselkörper hindurchfließen kann. Außerdem bewirken die an der Schulterfläche vorgesehenen Vertiefungen, daß der elastische Drosselkörper noch nicht drosselnd an beziehungsweise in den wellenförmig profilierten Steuerzapfen heran- beziehungsweise einläuft, da sich vorerst vor und hinter dem elastischen Ring ein zu seinem Einlauf und Verformung erforderlicher Differenzdruck nicht aufbauen kann. Erst mit höher werdendem Anschlußdruck wird der ringförmige elastische Drosselkörper soweit in die muldenförmigen Vertiefungen der Schulterfläche gedrückt, daß er sich dichtend in diese einschmiegt und somit der zur Regelung erforderliche Differenzdruck entstehen kann.

Durch die zeitlich versetzte Beanspruchung der axialen und radialen Steuerflächen wird mit dem vorbekannten Durchflußmengenregler schon bei vergleichsweise geringem Vordruck die geforderte Regelwassermenge erreicht. Die maximale Durchflußmenge wird jedoch auch bei diesem vorbekannten Durchflußmengenregler durch die lichte Weite des zwischen Steuerzapfen und Drosselkörper verbleibenden Steuerspalts begrenzt.

Aus der US-PS 4 000 857 schließlich kennt man ein sanitäres Einbauteil, das am Auslaufmundstück einer Wasserarmatur montierbar ist. Das vorbekannte Einbauteil weist einen Strahlregler auf, dem ein Durchflußmengenregler der eingangs erwähnten Art vorgeschaltet ist. Der Durchflußmengenregler hat einen Steuerzapfen, den ein ringförmiger Drosselkörper aus elastischem Material umgreift. Dieser Drosselkörper begrenzt sowohl zwischen sich und der inneren Mantelfläche des Reglergehäuses einerseits als auch zwischen sich und der Umfangs-Mantelfläche des Steuerzapfens andererseits einen Steuerspalt, dessen Durchtrittsquerschnitt durch den sich unter der beim Durchströmen bildenden Druckdifferenz verformenden Drosselkörper veränderbar ist. Dabei sind sowohl an der inneren Mantelfläche des Reglergehäuses als auch an der Umfangs-Mantelfläche des Steuerzapfens in Umfangsrichtung voneinander beabstandete und in Durchflußrichtung orientierte Regulierausnehmungen gleicher Querschnittsform vorgesehen.

Auch dieser vorbekannte Durchflußmengenregler vermag unter unterschiedlichen Flüssigkeitsdrücken die pro Zeiteinheit durchströmende Flüssigkeitsmenge nicht konstant auf dem angestrebten Durchfluß-Sollwert zu halten.

Es besteht daher insbesondere die Aufgabe, einen Durchflußmengenregler der eingangs erwähnten Art mit einer vergleichsweise hohen maximalen Durchflußmenge zu schaffen, der die pro Zeiteinheit gewünschte Durchflußmenge bereits bei einem vergleichsweise geringen Flüssigkeitsdruck erreicht und auch bei steigenden oder stark schwankenden Flüssigkeitsdrücken praktisch konstant hält.

Die erfindungsgemäße Lösung dieser Aufgabe besteht bei dem Durchflußmengenregler der eingangs erwähnten Art insbesondere darin, daß Regulierausnehmungen mit im Bereich des Drosselkörpers unterschiedlich geformten Querschnitten vorgesehen sind und daß die in niedrigeren Druckbereichen ansprechenden Regulierausnehmungen im Vergleich zu den in höheren Druckbereichen ansprechenden Regulierausnehmungen eine größere, dem Drosselkörper zugewandte lichte Öffnungsweite haben.

Auch bei dem erfindungsgemäßen Durchflußmengenregler kann die druckabhängige Verformung des ringförmigen Drosselkörpers nicht nur nach einer Seite, sondern sowohl nach innen als auch nach außen wirken und die entsprechenden Strömungsquerschnitte der Regulierausnehmungen steuern. Der erfindungsgemäße Durchflußmengenregler weist jedoch Regulierausnehmungen mit im Bereich des Drosselkörpers unterschiedlich geformten Querschnitten auf. Dabei haben die in niedrigeren Druckbereichen ansprechenden Regulierausnehmungen im Vergleich zu den in höheren Druckbereichen ansprechenden Regulierausnehmungen eine größere, dem Drosselkörper zugewandte lichte Öffnungsweite. Der erfindungsgemäße Durchflußmengenregler bietet den Vorteil, daß man den niederen Druckbereich durch sich schnell verschließende Regulierausnehmungen erfassen kann, während die im hohen Druckbereich ansprechenden Regulierausnehmungen vom Drosselkörper erst geschlossen werden, wenn dieser vom Flüssigkeitsdruck bereits sehr stark belastet wird. Dabei zeichnet sich der erfindungsgemäße Durchflußmengenregler durch eine vergleichsweise hohe maximale Durchflußmenge bei einer demgegenüber geringen Einbaugröße aus, weil der Drosselkörper sich zeitgleich und synchron in Richtung der beidseits vorgesehenen Regulierausnehmungen verformen kann und weil beidseits dieses Drosselkörpers jeweils ein Steuerspalt mit parallelen einzuregelnden Wasserströmen vorgesehen ist.

Zwar sind am zentralen Steuerzapfen des aus DE-OS 21 31 117 vorbekannten Durchflußmengenreglers unterschiedlich geformte wellenförmige Ausformungen vorhanden. Diese wellenförmigen Ausformungen begrenzen jedoch lediglich wie üblich gleichförmige Regulierausnehmungen. Unterschiedlich geformte Regulierausnehmungen sind in DE-OS 21 31 117 demgegenüber nicht vorgesehen.

Möglich ist, daß sowohl an der inneren Mantelfläche des Reglergehäuses als auch an der Umfangs-Mantelfläche des Steuerzapfens oder Steuerkegels jeweils Regulierausnehmungen mit im Bereich des Drosselkörpers unterschiedlich geformten Querschnitten vorgesehen sind.

Zur Trennung und Optimierung der Funktionen sieht jedoch eine bevorzugte Ausführungsform gemäß der Erfindung vor, daß die Regulierausnehmungen an der inneren Mantelfläche des Reglergehäuses im Vergleich zu denen an der Umfangs-Mantelfläche des Steuerzapfens oder Steuerkegels einen unterschiedlich geformten Querschnitt haben.

Dabei kann es vorteilhaft sein, wenn die Regulierausnehmungen mit der größeren lichten Öffnungsweite an der inneren Mantelfläche des Reglergehäuses oder an der Umfangs-Mantelfläche des Steuerzapfens vorgesehen sind.

Damit die Regulierausnehmungen mit der größeren lichten Öffnungsweite auch bei vergleichsweise geringen Drücken vom gummielastischem Drosselkörper gut angesteuert werden können, kann es vorteilhaft sein, wenn die Regulierausnehmungen mit der größeren lichten Öffnungsweite einen etwa kreissegmentförmigen Querschnitt haben.

Demgegenüber können die insbesondere bei höheren Flüssigkeitsdrücken des Strömungsmediums ansprechenden Regulierausnehmungen so ausgestaltet sein, daß diese Regulierausnehmungen mit der kleineren lichten Öffnungsweite zumindest in einem Teilbereich halbkreisförmig und/oder steilflankig ausgestaltet sind.

Die genaue Ausgestaltung der Regulierausnehmungen kann Abhängigkeit von den elastischen Eigenschaften des ringförmigen Elastomers erfolgen.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen Durchflußmengenregler in einem Querschnitt durch sein Reglergehäuse, wobei der Durchflußmengenregler sowohl an der inneren Mantelfläche seines Reglergehäuses als auch an der Umfangs-Mantelfläche eines zentralen Steuerzapfens in Umfangsrichtung voneinander beabstandete und in Durchflußrichtung orientierte Regulierausnehmungen hat,
- Fig. 2: den Durchflußmengenregler aus Fig. 1 in einem Längsschnitt und
- Fig. 3: ein Durchflußdiagramm des Durchflußmengenreglers gemäß den Fig. 1 und 2, wobei die pro Zeiteinheit durch den DurchflußmengenreglerdurchströmendeFlüssigkeitsmenge in Abhängigkeit vom Flüssigkeitsdruck dargestellt ist.

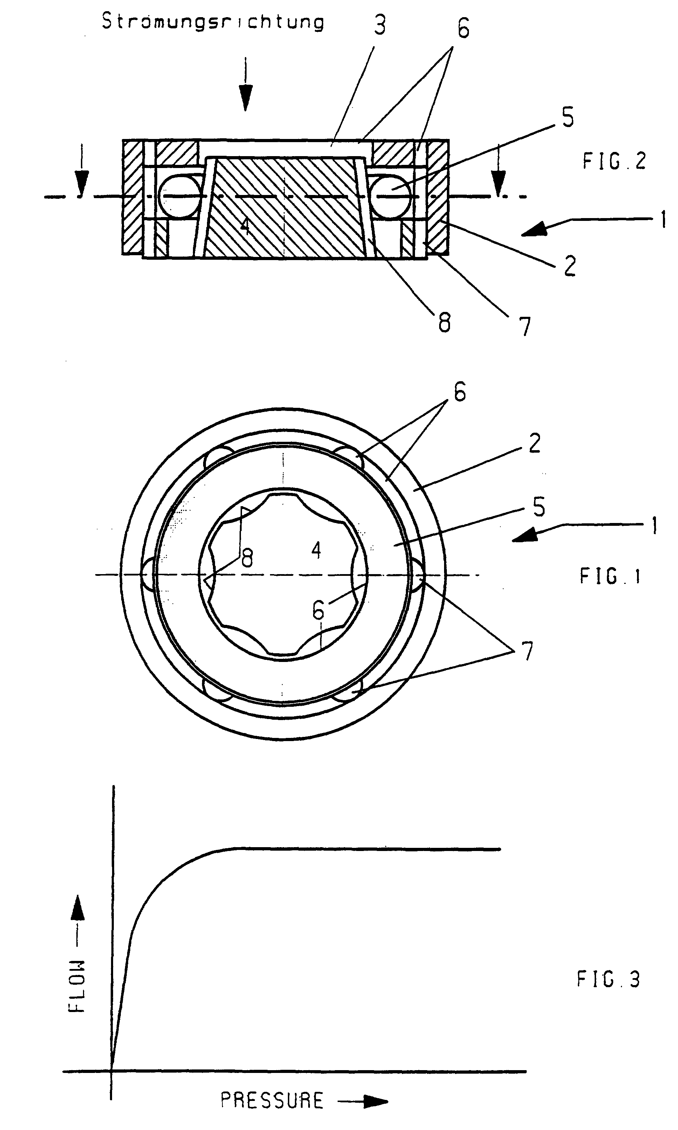

In den Fig. 1 und 2 ist ein Durchflußmengenregler 1 dargestellt, der ein Reglergehäuse 2 hat. Das Reglergehäuse 2 des Durchflußmengenreglers 1 ist in an sich üblicher Weise beispielsweise in das hier nicht weiter dargestellte Auslaufmundstück einer Sanitärarmatur oder in die Anschlußarmatur einer flexiblen Schlauchleitung einsetzbar, um die pro Zeiteinheit geforderte Wassermenge auch bei starken Druckschwankungen in den Wasserversorgungsleitungen konstant halten zu können.

Der Durchflußmengenregler 1 hat einen zentralen Steuerzapfen 4, der in einem Durchtrittskanal 3 des Reglergehäuses 2 gehäusefest gehalten ist. Der Steuerzapfen 4 wird von einem ringförmigen Drosselkörper 5 aus elastischem Material umgriffen. Wie Fig. 2 zeigt, verjüngt sich der Steuerzapfen 4 zumindest in dem vom Drosselkörper 5 umgriffenen Teilbereich seiner Längserstreckung entgegen der Strömungsrichtung Pfl etwa konisch.

Der Drosselkörper bildet sowohl zwischen sich und der den Durchtrittskanal 3 begrenzenden inneren Mantelfläche des Reglergehäuses 2 als auch zwischen sich und der Umfangs-Mantelfläche des Steuerzapfens 4 einen Steuerspalt 6, dessen Durchtrittsquerschnitt durch den sich unter der beim Durchströmen bildenden Druckdifferenz verformenden Drosselkörper 5 veränderbar ist.

Wie in Fig. 1 zu erkennen ist, sind sowohl an der inneren Mantelfläche des Reglergehäuses 2 als auch an der Umfangs-Mantelfläche des Steuerzapfens 4 Regulierausnehmungen 7, 8 vorgesehen, die in Umfangsrichtung voneinander beabstandet und in Durchflußrichtung Pfl orientiert sind. Die Regulierausnehmungen 7, 8 sind in Zuström- und Abströmrichtung sowie zum Steuerspalt 6 hin offen ausgebildet.

Während die Regulierausnehmungen 8 an der Umfangs-Mantelfläche des Steuerzapfens 4 eine größere lichte Öffnungsweite haben und bereits bei niedrigeren Druckbedingungen des Strömungsmediums ansprechen, weisen die an der inneren Mantelfläche des Reglergehäuses 2 befindlichen Regulierausnehmungen 7 eine demgegenüber kleinere lichte Öffnungsweite auf, so daß der gummielastische Drosselkörper erst bei einer hohen, auf ihn einwirkenden Druckbelastung des Strömungsmediums in die Reguliernuten oder Regulierausnehmungen 7 an der inneren Mantelfläche des Reglergehäuses 2 eindringen kann.

Durch das in Abhängigkeit vom Flüssigkeitsdruck mehr oder weniger starke Eindringen des gummielastischen Drosselkörpers 5 in die Regulierausnehmungen 7, 8 wird die pro Zeiteinheit durch den Durchflußmengenregler 1 durchströmende Wassermenge konstant gehalten und kann auch bei zunehmend steigendem Wasserdruck eine definierte Wassermenge pro Zeiteinheit nicht übersteigen.

Während die Regulierausnehmungen 8 mit der größeren lichten Öffnungsweite einen etwa kreissegmentförmigen Querschnitt haben, weisen die an der inneren Mantelfläche des Reglergehäuses 2 vorgesehenen Regulierausnehmungen 7 mit der kleineren lichten Öffnungsweite einen steilflankigen und im Bereich des Nutgrundes etwa kreissegmentförmigen Querschnitt auf.

Aus dem in Fig. 3 dargestellten Diagramm wird deutlich, daß sich der Durchflußmengenregler 1 durch die mittels der unterschiedlich geformten Regulierausnehmungen 7, 8 abgestimmte Verformung sowohl im Nieder- als auch im Hochdruckbereich durch ein sehr gutes und gleichmäßiges Regelergebnis auszeichnet. Der Durchflußmengenregler1 erreicht die pro Zeiteinheit gewünschte Durchflußmenge bereits bei einem vergleichsweise geringen Flüssigkeitsdruck und hält diese Flüssigkeitsmenge auch bei steigenden oder stark schwankenden Flüssigkeitsdrücken weitestgehend konstant. Da der Drosselkörper des hier dargestellten Durchflußmengenreglers sich zeitgleich und synchron in Richtung der beidseits vorgesehenen Regulierausnehmungen verformen kann und da beidseits dieses Drosselkörpers jeweils ein Steuerspalt mit parallelen einzuregelnden Wasserströmen vorgesehen ist, zeichnet sich der erfindungsgemäße Durchflußmengenregler durch eine vergleichsweise hohe maximale Durchflußmenge bei einer demgegenüber geringen Einbaugröße aus.

## Patentansprüche

1. Durchflußmengenregler (1) mit einem Reglergehäuse (2), das in einem Durchtrittskanal (3) einen Steuerzapfen (4) oder Steuerkegel aufweist, den ein ringförmiger Drosselkörper (5) aus elastischem Material umgreift, welcher Drosselkörper (5) zwischen sich und zumindest einem gehäusefesten Teil einen Steuerspalt (6) begrenzt, dessen Durchtrittsquerschnitt durch den sich unter der beim Durchströmen bildenden Druckdifferenz verformenden Drosselkörper (5) veränderbar ist, wobei der Steuerspalt (6) sowohl zwischen dem Drosselkörper (5) und der den Durchtrittskanal (3) begrenzenden inneren Mantelfläche des Reglergehäuses (2) als auch zwischen dem Drosselkörper (5) und der Umfangs-Mantelfläche des Steuerzapfens (4) oder Steuerkegels vorgesehen ist, und wobei sowohl an der inneren Mantelfläche des Reglergehäuses (2) als auch an der Umfangs-Mantelfläche des Steuerzapfens (4) oder Steuerkegels in Umfangsrichtung voneinander beabstandete und in Durchflußrichtung orientierte Regulierausnehmungen (7, 8) vorgesehen sind, **dadurch gekennzeichnet, daß** Regulierausnehmungen (7,8) mit im Bereich des Drosselkörpers (5) unterschiedlich geformten Querschnitten vorgesehen sind, und daß die in niedrigeren Druckbereichen ansprechenden Regulierausnehmungen (8) im Vergleich zu den in höheren Druckbereichen ansprechenden Regulierausnehmungen (7) eine größere, dem Drosselkörper (5) zugewandte lichte Öffnungsweite haben.

2. Durchflußmengenregler nach Anspruch 1, **dadurch gekennzeichnet, daß** sowohl an der inneren Mantelfläche des Reglergehäuses (2) als auch an der Umfangs-Mantelfläche des Steuerzapfens (4) oder Steuerkegels jeweils Regulierausnehmungen mit im Bereich des Drosselkörpers (5) unterschiedlich geformten Querschnitten hervorgesehen sind.

3. Durchflußmengenregler nach Anspruch 1 oder 2, **dadurch gekennzeichnet, daß** die Regulierausnehmungen (7) an der inneren Mantelfläche des Reglergehäuses (2) im Vergleich zu denen (8) an der Umfangs-Mantelfläche des Steuerzapfens (4) oder Steuerkegels einen unterschiedlich geformten Querschnitt haben.

4. Durchflußmengenregler nach einem der Ansprüche 1 bis 3, **dadurch gekennzeichnet, daß** die Regulierausnehmungen (8) mit der größeren lichten Öffnungsweite an der inneren Mantelfläche des Reglergehäuses oder an der Umfangsmantelfläche des Steuerzapfens (4) oder Steuerkegels vorgesehen sind.

5. Durchflußmengenregler nach einem der Ansprüche 1 bis 4, **dadurch gekennzeichnet, daß** die Regulierausnehmungen (8) mit der größeren lichten Öffnungsweite einen etwa kreissegmentförmigen Querschnitt haben.

6. Durchflußmengenregler nach einem der Ansprüche 1 bis 5, **dadurch gekennzeichnet, daß** die Regulierausnehmungen (7) mit der kleineren lichten Öffnungsweite zumindest in einem Teilbereich halbkreisförmig und/oder steilflankig ausgestaltet sind.

## Claims

1. Flow regulator (1) having a regulator housing (2) which comprises, in a throughflow channel (3), a control tap (4) or control cone which is enclosed by an annular throttle member (5) made of resilient material, said throttle member (5) defining, between itself and at least one part which is integral with the housing, a control gap (6) whose cross section of flow can be varied by the throttle member (5) deforming under the pressure difference produced during throughflow, the control gap (6) being provided both between the throttle member (5) and the inner surface of the regulator housing (2) defining the throughflow channel (3) and also between the throttle member (5) and the circumferential surface of the control tap (4) or control cone, and wherein regulating recesses (7, 8) are provided both on the inner surface of the regulator housing (2) and on the circumferential surface of the control tap (4) or control cone, spaced apart in the circumferential direction and oriented in the direction of throughflow, **characterised in that** regulating recesses (7, 8) are provided, having differently shaped cross sections in the region of the throttle member (5), and **in that** the regulating recesses (8) which respond at lower pressures have a greater internal width of opening facing the throttle member (5) than the regulating recesses (7) which respond at higher pressures.

2. Flow regulator according to claim 1, **characterised in that** both on the inner surface of the regulator housing (2) and on the circumferential surface of the control tap (4) or control cone, regulating recesses are provided having differently shaped cross sections in the region of the throttle member (5).

3. Flow regulator according to claim 1 or 2, **characterised in that** the regulating recesses (7) on the inner surface of the regulator housing (2) have a differently shaped cross section from those (8) on the circumferential surface of the control tap (4) or control cone.

4. Flow regulator according to one of claims 1 to 3, **characterised in that** the regulating recesses (8) with the greater internal width of opening are provided on the inner surface of the regulator housing or on the circumferential surface of the control tap (4) or control cone.

5. Flow regulator according to one of claims 1 to 4, **characterised in that** the regulating recesses (8) with the greater internal width of opening have a cross section substantially in the form of a segment of a circle.

6. Flow regulator according to one of claims 1 to 5, **characterised in that** the regulating recesses (7) with the smaller internal width of opening are of hemispherical and/or steep-sided construction at least in one area.

## Revendications

1. Régulateur de débit (1) avec un boîtier de régulateur (2) qui présente dans un canal de passage (3) un nez de commande (4) ou cône de commande entouré par un corps d'étranglement annulaire (5) en matériau élastique, lequel corps d'étranglement (5) limite entre lui et au moins une partie solidaire du boîtier une fente de commande (6) dont la section de passage est modifiable par l'intermédiaire du corps d'étranglement (5) se déformant sous l'effet de la différence de pression apparaissant lors du passage du courant, la fente de commande (6) étant prévue aussi bien entre le corps d'étranglement (5) et la surface d'enveloppe intérieure du boîtier de régulateur (2) limitant le canal de passage (3) qu'entre le corps d'étranglement (5) et la surface d'enveloppe périphérique du nez de commande (4) ou cône de commande, et des encoches de régulation (7, 8) espacées en direction périphérique et orientées dans le sens du passage étant prévues aussi bien sur la surface d'enveloppe intérieure du boîtier de régulateur (2) que sur la surface d'enveloppe périphérique du nez de commande (4) ou cône de commande, **caractérisé par le fait qu'**il est prévu des encoches de régulation (7, 8) avec des sections de forme différente au voisinage du corps d'étranglement (5) et que les encoches de régulation (8) réagissant aux basses plages de pression ont une largeur d'ouverture intérieure tournée vers le corps d'étranglement (5) plus grande que les encoches de régulation (7) réagissant aux plages de pression élevées.

2. Régulateur de débit selon la revendication 1, **caractérisé par le fait qu'**il est prévu aussi bien sur la surface d'enveloppe intérieure du boîtier de régulateur (2) que sur la surface d'enveloppe périphérique du nez de commande (4) ou cône de commande chaque fois des encoches de régulation avec des sections de forme différente au voisinage du corps d'étranglement (5).

3. Régulateur de débit selon la revendication 1 ou 2, **caractérisé par le fait que** les encoches de régulation (7) ont sur la surface d'enveloppe intérieure du boîtier de régulateur (2) une section de forme différente que celles (8) sur la surface d'enveloppe périphérique du nez de commande (4) ou cône de commande.

4. Régulateur de débit selon l'une des revendications 1 à 3, **caractérisé par le fait que** les encoches de régulation (8) de plus grande largeur d'ouverture intérieure sont prévues sur la surface d'enveloppe intérieure du boîtier de régulateur ou sur la surface d'enveloppe périphérique du nez de commande (4) ou cône de commande.

5. Régulateur de débit selon l'une des revendications 1 à 4, **caractérisé par le fait que** les encoches de régulation (8) de plus grande largeur d'ouverture intérieure ont une section approximativement en forme de segment de cercle.

6. Régulateur de débit selon l'une des revendications 1 à 5, **caractérisé par le fait que** les encoches de régulation (7) de plus petite largeur d'ouverture intérieure sont au moins dans une partie formés en demi-cercle et/ou à flancs raides.
